# EUROPÄISCHE PATENTANMELDUNG

(11) **EP 4 588 389 A1**
(43) Veröffentlichungstag der Anmeldung: **23.07.2025**
(21) Anmeldenummer: 25151811.4
(22) Anmeldetag: 14.01.2025
(51) Int. Cl.: A42C 2/00, B29C 44/34

(54) **HELM**

(30) Priorität: 17.01.2024 DE 102024101337
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein Helm, bei dem es sich etwa um einen Sporthelm oder einen Arbeitsschutzhelm handeln kann, umfasst einen Helmkörper, der einen festen Schaum aus expandierten Schaumpartikeln umfasst, wobei der feste Schaum zumindest bereichsweise eine variierende Härte aufweist.

## Beschreibung

Die Erfindung betrifft einen Helm, insbesondere einen Sporthelm oder einen Arbeitsschutzhelm.

Ein derartiger Helm dient zum Schutz des jeweiligen Trägers des Helms gegen Kopfverletzungen im Falle eines Sturzes oder eines Anpralls eines Objekts an den Kopf des Trägers. Je nach Anwendung kann der Schutzhelm als Sporthelm oder Arbeitsschutzhelm dienen und ausgebildet sein, beispielsweise als Fahrradhelm oder Reithelm. Insbesondere bei einer Anwendung als Fahrradhelm kann der Helm eine oder mehrere Belüftungsöffnungen aufweisen, um eine passive Kühlung des Kopfes des Trägers durch Umgebungsluft oder Fahrtwind zu unterstützen.

Der Helm umfasst typischerweise einen Helmkörper, der eine zumindest im Wesentlichen (beispielsweise lediglich von den genannten Belüftungsöffnungen abgesehen) konkav geformte Innenseite, die bei aufgesetztem Helm dem Kopf des Trägers des Helms zugewandt ist, und eine dazu entgegengesetzte, zumindest im Wesentlichen konvex geformte Außenseite aufweist. Der Helmkörper ist hinsichtlich Form, Dicke und Material dazu ausgelegt, die bei einem Stoß (Aufprall oder Anprall) auf den Helm einwirkende kinetische Energie durch inelastische und/oder elastische Verformung möglichst weitgehend zu absorbieren. Derartige stoßabsorbierende Eigenschaften können sich insbesondere daraus ergeben, dass der Helmkörper aus einem festen Schaum ausgebildet ist.

Es ist üblich, den Helmkörper nach der sogenannten Inmold-Technik durch Hinterspritzen einer zuvor gesondert hergestellten äußeren Helmschale auszubilden. Grundsätzlich kann der Helmkörper aber auch unabhängig von einer Helmschale als Formkörper aus festem Schaum hergestellt werden. In beiden Fällen wird der feste Schaum dabei durch Expandieren von Schaumpartikeln eines geeigneten Materials innerhalb einer definierten Form ausgebildet. Grundsätzlich kann der Helmkörper vollständig durch den festen Schaum gebildet werden. Dadurch kann der Helmkörper vergleichsweise einfach als ein einzelnes Formteil hergestellt werden.

In der Regel ist dieses Formteil dann weitgehend homogen ausgebildet, so dass verschiedene Bereiche des Helmkörpers zumindest im Wesentlichen dieselben physikalischen Eigenschaften, insbesondere dieselben stoßdämpfenden Eigenschaften, aufweisen. Allerdings kann es zweckmäßig sein, wenn der Helm an verschiedenen Stellen verschiedene physikalische Eigenschaften aufweist. So kann es etwa sinnvoll sein, wenn sich der Helmkörper zumindest überwiegend vergleichsweise leicht und stark plastisch verformen lässt, um möglichst viel kinetische Energie absorbieren zu können, der Helm an seiner Außenseite aber dennoch eher hart ist, um nicht bereits durch kleine Stöße so beschädigt zu werden, dass er nicht länger verwendet werden kann. Ferner kann es zweckmäßig sein, Bereiche des Helms vorzusehen, die sich vergleichsweise stark scheren lassen, etwa um Drehmomente aufnehmen zu können, und andere Bereiche, die gegenüber Scherkräften vergleichsweise starr sind, etwa um eine stabile Struktur des Helms zu gewährleisten.

An einem Helm verschiedene Bereiche mit unterschiedlichen physikalischen Eigenschaften vorzusehen, wird typischerweise dadurch erreicht, dass der Helm aus mehreren separat ausgebildeten Elementen mit verschiedenen physikalischen Eigenschaften ausgebildet wird, wobei je nachdem, welche Eigenschaft in welchem Bereich des Helms erwünscht ist, ein entsprechendes Element in dem jeweiligen Bereich angeordnet ist.

Beispielsweise damit der Helm an seiner Außenseite eher hart sein kann, ohne dass der gesamte Helmkörper entsprechend hart ausgebildet sein muss, kann der Helm eine von dem Helmkörper separat ausgebildete dünne Helmschale aus einem entsprechenden Material (zum Beispiel einem Acrylnitril-Butadien-Styrol-Copolymer (ABS), Polyethylenterephthalat (PET) oder einem Polycarbonat (PC)) umfassen, die an der Außenseite des Helmkörper angeordnet ist und die Außenseite des Helmkörpers zumindest im Wesentlichen vollständig überdeckt. Oder damit der Helmkörper beispielsweise in einem Randbereich andere stoßabsorbierende Eigenschaften aufweisen kann als in einem zentralen Bereich, kann der Helmkörper mehrteilig ausgebildet sein, wobei die unterschiedlichen Teile aus unterschiedlichen Materialien mit unterschiedlichen stoßabsorbierenden Eigenschaften bestehen und nach ihrer separaten Herstellung miteinander verbunden werden, um gemeinsam den Helmkörper zu bilden.

Je mehr Teile separat hergestellt und je mehr verschiedene Materialien dazu auf je unterschiedliche Weise verarbeitet und/oder bearbeitet werden müssen, desto aufwendiger ist jedoch die Herstellung des Helms insgesamt. Darüber hinaus ist auch das Recycling eines Helms, der viele verschiedene Materialien umfasst, schwieriger.

Es ist eine Aufgabe der Erfindung, einen Helm der genannten Art bereitzustellen, der besonders gut an verschiedene Anforderungen angepasst ist und sich dennoch mit vergleichsweise geringem Aufwand herstellen und nach seiner Nutzung vergleichsweise einfach entsorgen lässt.

Die Aufgabe wird gelöst durch einen Helm mit den Merkmalen des Anspruchs 1. Vorteilhafte Ausführungsformen der Erfindung ergeben sich aus den Unteransprüchen, der vorliegenden Beschreibung sowie der Figur.

Der Helm, bei dem es sich insbesondere um einen Sporthelm oder um einen Arbeitsschutzhelm handeln kann, umfasst erfindungsgemäß einen Helmkörper, der einen festen Schaum aus expandierten Schaumpartikeln umfasst. Dabei kann der Helmkörper eine zumindest im Wesentlichen konkav geformte Innenseite, die bei aufgesetztem Helm dem Kopf des Trägers des Helms zugewandt ist, und eine dazu entgegengesetzte, zumindest im Wesentlichen konvex geformte Außenseite aufweisen.

Dadurch, dass der Helmkörper einen festen Schaum umfasst, kann er das zentrale stoßabsorbierende Element des Helms bilden. Grundsätzlich kann der feste Schaum (in gewissem Umfang) elastisch verformbar sein. Vorzugsweise handelt sich bei dem festen Schaum aber um einen Hartschaum, so dass der feste Schaum zumindest im Wesentlichen nur plastisch verformbar ist.

Der Schaum ist aus expandierten Schaumpartikeln gebildet. Bei diesen Schaumpartikeln, die zumindest im Wesentlichen Kugelform aufweisen können, handelt es sich um kleine Teilchen, insbesondere sogenannte Schaumperlen oder Beads. Die Schaumpartikel können vorgeschäumt sein, d. h. bereits als Schaum, beispielsweise aus einem Mikrogranulat oder direkt aus der Schmelze eines schäumbaren Materials, insbesondere eines Polymers, ausgebildet sein. Dabei weisen die Schaumpartikel zunächst eine vergleichsweise dichte Struktur (kleine Zellen) auf und können, insbesondere durch Zuführen von Wärme, dazu gebracht werden, zu expandieren.

Wenn ein definierter Raum einer bestimmten Form (beispielsweise eine Gießform für das Herstellen des Helmkörpers) mit solchen noch nicht (vollständig) expandierten Schaumpartikeln zumindest weitgehend ausgefüllt wird und die Schaumpartikel dann zum Expandieren gebracht werden, dehnen sie sich in die verbleibenden Zwischenräume aus, insbesondere derart, dass sie letztlich den gesamten Raum einnehmen. Typischerweise werden die expandierenden Schaumpartikel dabei gegeneinander gedrängt, so dass sie aneinander haften, miteinander verkleben oder sogar fusionieren. Dazu trägt auch bei, dass sie während der Expansion vorübergehend ihre feste Form verlieren und weich werden.

Dabei können die Schaumpartikel, insbesondere wenn ihnen für das Expandieren Wärme zugeführt wird, zumindest teilweise auch schmelzen. Vorzugsweise werden die Schaumpartikel infolge des Expandierens (und des dabei erfolgenden Aufweichens bzw. Schmelzens) stoffschlüssig miteinander verbunden, insbesondere indem sie zumindest teilweise miteinander verschmelzen. Die expandierten Schaumpartikel bilden dann (gegebenenfalls nachdem sie abgekühlt sind) einen durchgehenden Formkörper aus festem Schaum, der die Form des definierten Raumes aufweist, der insofern als Gießform für die Ausbildung des festen Schaums fungiert.

Der Helmkörper umfasst zumindest einen solchen festen Schaum. Grundsätzlich kann der Helmkörper auch mehrere voneinander räumlich gegeneinander abgegrenzte, gegebenenfalls separat voneinander hergestellte, feste Schäume umfassen. Dabei kann vorgesehen sein, dass alle diese Schäume aus expandierten Schaumpartikeln desselben Materials gebildet sind oder dass ein oder mehrere dieser Schäume aus expandierten Schaumpartikeln eines anderen Materials gebildet sind als ein oder mehrere andere dieser Schäume.

Vorzugsweise umfasst der Helmkörper jedoch nur einen einzigen, durchgehenden festen Schaum. Insbesondere kann der Helmkörper durch den festen Schaum gebildet werden.

Ferner kann der Helmkörper grundsätzlich neben dem genannten festen Schaum (und gegebenenfalls weiteren festen Schäumen) sonstige Elemente umfassen. Beispielsweise kann der Helmkörper eine äußere Helmschicht und eine innere Helmschicht (sowie gegebenenfalls noch weitere Helmschichten) umfassen, wobei die äußere Helmschicht der genannten Außenseite des Helmkörpers näher ist als die innere Helmschicht, insbesondere die Außenseite umfasst, und die innere Helmschicht der genannten Innenseite des Helmkörpers näher ist als die äußere Helmschicht, insbesondere die Innenseite umfasst, und wobei nur eine dieser Helmschichten, insbesondere die äußere Helmschicht, den festen Schaum umfasst, insbesondere durch den festen Schaum gebildet wird.

Vorzugsweise ist der Helmkörper allerdings einstückig ausgebildet. Er umfasst dann also keine weiteren, von dem festen Schaum separat ausgebildeten Elemente.

Dass der feste Schaum aus expandierten Schaumpartikeln gebildet ist, ist nicht ausschließlich gemeint. Vielmehr kann der feste Schaum aus mehr als nur expandierten Schaumpartikeln bestehen. Beispielsweise können in den festen Schaum sonstige Partikel, zum Beispiel Fasern zur Verstärkung des Schaums, eingebettet sein.

Als Material der Schaumpartikel kommt grundsätzlich jeder Kunststoff in Betracht, aus dem sich expandierbare Schaumpartikel und daraus dann Formteile erzeugen lassen. Insbesondere kann der Helmkörper einen festen Schaum aus expandiertem Polystyrol (EPS), expandiertem Polypropylen (EPP), expandiertem AcrylnitrilButadien-Styrol-Copolymer (EABS), expandiertem Polycarbonat (EPC), expandiertem Polyamid (EPA), expandiertem Polybutylenterephthalat (EPBT), expandiertem Polyethylenterephthalat (EPET), expandiertem modifiziertem Polyphenylenether (EmPPE), expandiertem thermoplastischem Polyurethan (ETPU), expandiertem Polyoxymethylen (EPOM), expandiertem Polymethylmethacrylat (EP-MMA) und/oder expandiertem Polyetherketon (EPEK) umfassen. Der feste Schaum kann auch aus einer Mischung von Schaumpartikeln zweier oder mehrerer der genannten Stoffe gebildet sein.

Erfindungsgemäß ist ferner vorgesehen, dass der feste Schaum zumindest bereichsweise eine variierende Härte aufweist. Mit der variierenden Härte kann zudem eine variierende Festigkeit und/oder Steifigkeit des festen Schaums einhergehen.

Eine Besonderheit des erfindungsgemäßen Helms besteht also darin, dass der Helmkörper insbesondere hinsichtlich der physikalischen Eigenschaft der Härte nicht homogen, sondern aus einem festen Schaum mit bereichsweise variierender Härte ausgebildet ist. Das ermöglicht es, verschiedene Bereiche des Helmkörpers hinsichtlich ihrer Härte individuell an die in dem jeweiligen Bereich vorliegenden Anforderungen bzw. gewünschten Eigenschaften anzupassen. Auf diese Weise kann der Helmkörper auch Aufgaben übernehmen, die ansonsten durch andere Elemente des Helms erfüllt würden. Zudem kann der Helmkörper dabei einteilig ausgebildet sein und dennoch insgesamt vielfältige Eigenschaften aufweisen, die ansonsten auf mehrere Teile des Helmkörper verteilt werden müssten.

Der feste Schaum kann dabei grundsätzlich auf die beschriebene Weise erzeugt werden, nämlich durch Expandieren von Schaumpartikeln innerhalb einer definierten Form zur Ausbildung eines der Form entsprechenden Formkörpers, wobei die variierende Härte des festen Schaums dadurch erreicht werden kann, dass den Schaumpartikeln in unterschiedlichen Bereichen der Form mit unterschiedlicher Intensität (Menge und/oder Geschwindigkeit) Wärme zugeführt wird. Mit anderen Worten werden die Schaumpartikel in einem oder mehreren Bereichen der Form stärker und/oder schneller erhitzt als in einem oder mehreren anderen Bereichen der Form. Hierzu kann es insbesondere zweckmäßig sein, die Wärme in Form von Infrarotstrahlung zuzuführen, die sich räumlich vergleichsweise präzise kontrollieren lässt. Beispielweise kann der feste Schaum entsprechend einer der in WO 2017/109079 A1 beschriebenen Weisen erzeugt werden.

Gemäß einer vorteilhaften Ausführungsform ist der feste Schaum durchgehend aus demselben Material oder derselben Materialzusammensetzung gebildet. Sofern der feste Schaum aus mehreren Materialien besteht, ist er also aus einer zumindest im Wesentlichen homogenen Mischung ausgebildet; wenn der feste Schaum nur ein einziges Material umfasst, ist dieses Material ohnehin homogen verteilt. Dass verschiedene Bereiche des festen Schaums unterschiedliche Härten aufweisen, kann sich also nicht daraus ergeben, dass die unterschiedlichen Bereiche unterschiedliche Materialzusammensetzungen aufweisen. Vielmehr ergibt sich die bereichsweise variierende Härte vorzugsweise (ausschließlich) aus dem Vorgang des Ausbildens des festen Schaums, insbesondere daraus, wie die Schaumpartikel, aus denen der feste Schaum gebildet wird, in verschiedenen Bereichen auf unterschiedliche Weise zum Expandieren gebracht werden, nämlich vorzugsweise (unter anderem) durch Erhitzen mittels Infrarotstrahlung, wobei den verschiedenen Bereichen mit unterschiedlicher Intensität Wärme zugeführt wird (vgl. den vorstehenden Absatz).

Da der feste Schaum zumindest bereichsweise eine variierende Härte aufweist, gibt es unterschiedliche Bereiche des festen Schaums, die sich in ihrer Härte voneinander unterscheiden. Insbesondere kann der feste Schaum zumindest einen ersten Bereich umfassen, der (durchgehend) eine erste Härte aufweist, und einen von dem ersten Bereich verschiedenen zweiten Bereich umfassen, der (durchgehend) eine von der ersten Härte verschiedene zweite Härte aufweist. Die Härte variiert dabei nicht lediglich auf mikroskopischer Ebene, sondern es kann vorgesehen sein, dass sich der genannte erste Bereich und der genannte zweite Bereich jeweils in zumindest eine (jeweilige) Raumrichtung über mindestens 1 cm, vorzugsweise mindestens 2 cm, insbesondere mindestens 3 cm, erstrecken.

Vorzugsweise gehen die Bereiche unterschiedlicher Härte (beispielweise der genannte erste Bereich und der genannte zweite Bereich) dabei stoffschlüssig ineinander über. Mit anderen Worten ist der feste Schaum, den der Helmkörper umfasst, auch an Stellen, an den sich seine Härte ändert, stofflich kontinuierlich ausgebildet, weist also keine Unterbrechung in seiner Materialstruktur auf.

Dagegen muss sich die Härte nicht unbedingt kontinuierlich ändern, sondern kann sich zwischen zwei Bereichen unterschiedlicher Härte auch (zumindest nahezu) sprunghaft ändern. Das kann insbesondere eine Folge einer lokal sehr unterschiedlichen thermischen Einwirkung auf die verschiedenen Bereiche beim Ausbilden des festen Schaums sein. Ein bestimmter Bereich innerhalb der Form, in der der feste Schaum ausgebildet wird, kann beispielsweise dadurch besonders stark im Vergleich zu einem angrenzenden Bereich erhitzt werden (und sich dadurch in seiner Härte besonders stark von dem angrenzenden Bereich unterscheiden), dass die Schaumpartikel in diesem Bereich unter Verwendung eines Wärmeträgers, wie etwa von Wasser oder vorzugsweise eines Thermoöls, für eine präzise lokale Temperierung der Schaumpartikel bzw. der Form erhitzt werden.

Gemäß einer weiteren vorteilhaften Ausführungsform weist der Helmkörper näherungsweise eine Kugelschalenform (d. h. eine Form, die näherungsweise einem Teil einer Kugelschale, insbesondere einer Halbkugelschale, entspricht) auf, wobei die Härte des festen Schaums bezüglich eines Mittelpunkts der Kugelschalenform in radialer Richtung variiert. Die weiter oben genannte konkav geformte Innenseite des Helmkörpers kann dabei radial nach innen, d. h. auf diesen Mittelpunkt zu, weisend ausgerichtet sein, während die konvex geformte Außenseite des Helmkörpers radial nach außen, d. h. von diesem Mittelpunkt weg, weisend ausgerichtet sein kann. Die Härte des festen Schaums kann dabei insbesondere insofern in radialer Richtung variieren, als der feste Schaum in einem radial inneren Bereich eine andere Härte aufweist als in einem (relativ zu dem radial inneren Bereich) radial äußeren Bereich.

Gemäß einer vorteilhaften Weiterbildung nimmt die Härte des festen Schaums nach radial außen und/oder nach radial innen zu. Mit anderen Worten kann es beispielsweise vorteilhaft sein, dass die Härte des festen Schaums von radial innen nach radial außen, von radial außen nach radial innen oder aber ausgehend von einem radial mittleren Bereich sowohl nach radial außen als auch nach radial innen, insbesondere monoton (gegebenenfalls zumindest nahezu sprunghaft), zunimmt.

Insbesondere kann es vorteilhaft sein, dass der feste Schaum eine äußere Oberflächenschicht aufweist, die den Helmkörper radial (bezüglich des genannten Mittelpunkts der Kugelschalenform) nach außen begrenzt, eine innere Oberflächenschicht aufweist, die den Helmkörper radial nach innen begrenzt, sowie einen Kern aufweist, der zwischen der äußeren Oberflächenschicht und der inneren Oberflächenschicht angeordnet ist, wobei die Härte der äußeren Oberflächenschicht und/oder die Härte der inneren Oberflächenschicht größer als die Härte des Kerns ist. Zwischen dem Kern und der äußeren und/oder der inneren Oberflächenschicht können dabei ein oder mehrere weitere Schichten und/oder Übergangsbereiche zwischen verschiedenen Schichten ausgebildet sein. Dadurch, dass der feste Schaum eine derartige, im Vergleich zu einem Kern des festen Schaums härtere Oberflächenschicht aufweist, kann es vorteilhafterweise ermöglicht werden, an der entsprechenden Seite (Außenseite bzw. Innenseite) des Helmkörpers auf das Vorsehen einer gesonderten Helmschale zum Schutz des Helmkörpers zu verzichten.

Gemäß einer weiteren vorteilhaften Ausführungsform weist der Helmkörper näherungsweise eine Kugelschalenform (d. h. eine Form, die näherungsweise einem Teil einer Kugelschale, insbesondere einer Halbkugelschale, entspricht; insbesondere die in Bezug auf die vorstehend genannten Ausführungsformen genannte Kugelschalenform) auf, wobei die Härte des festen Schaums bezüglich eines Mittelpunkts der Kugelschalenform in tangentialer (d. h. um den Mittelpunkt M umlaufender) Richtung variiert.

Insbesondere kann es vorteilhaft sein, dass die Härte des festen Schaums an Enden der tangentialen Erstreckung des Helmkörpers größer als in Bereichen dazwischen ist. Grundsätzlich kann es aber auch gerade umgekehrt sein, so dass die Härte des festen Schaums an Enden der tangentialen Erstreckung des Helmkörpers kleiner als in Bereichen dazwischen ist.

Die genannten Enden der tangentialen Erstreckung des Helmkörpers können insbesondere einen umlaufenden Rand des Helmkörpers umfassen bzw. durch diesen gebildet werden. Dieser Rand kann die genannte Außenseite des Helmkörpers mit der genannten Innenseite des Helmkörpers verbinden und sich dabei einmal um den gesamten Helmkörper herum erstrecken. Dabei ist es besonders vorteilhaft, wenn ein solcher Rand eine andere, insbesondere größere, Härte aufweist als ein innerer (innerhalb des Rands angeordneter, von den Enden der tangentialen Erstreckung des Helmkörpers beabstandeter) Bereich des Helmkörpers, der dem genannten Kern entsprechen kann.

Sofern der Helm Belüftungsöffnungen aufweist, die sich auch durch den Helmkörper erstrecken, kann es ferner zweckmäßig sein, wenn der Helmkörper auch in Bereichen, die an die Belüftungsöffnungen angrenzen (gegebenenfalls die Ränder der Belüftungsöffnungen umfassen), sie insbesondere umschließen, eine andere, insbesondere größere, Härte aufweist als in von den Belüftungsöffnungen weiter entfernten Bereichen, wie etwa dem genannten Kern des Helmkörpers.

Insbesondere ist es vorteilhaft, wenn die Härte des festen Schaums bezüglich des genannten Mittelpunkts der Kugelschalenform sowohl in radialer Richtung als auch in tangentialer Richtung variiert, wobei die Härte des festen Schaums an der genannten äußeren Oberflächenschicht und der genannten inneren Oberflächenschicht sowie an Enden der tangentialen Erstreckung des Helmkörpers beispielsweise größer als die Härte in Bereichen dazwischen, insbesondere als die Härte des genannten Kerns, ist. Auf diese Weise kann der Helmkörper nach außen hin weitgehend eine feste Schale und zugleich einen im Hinblick auf eine möglichst umfassende Stoßabsorption optimierten Kern aufweisen, ohne dazu mehrteilig oder aus mehreren verschiedenen Materialien ausgebildet sein zu müssen.

Die Erfindung wird im Folgenden lediglich beispielhaft unter Bezugnahme auf die Figur weiter erläutert, die eine Ausführungsform des erfindungsgemäßen Helms in einer Schnittdarstellung zeigt.

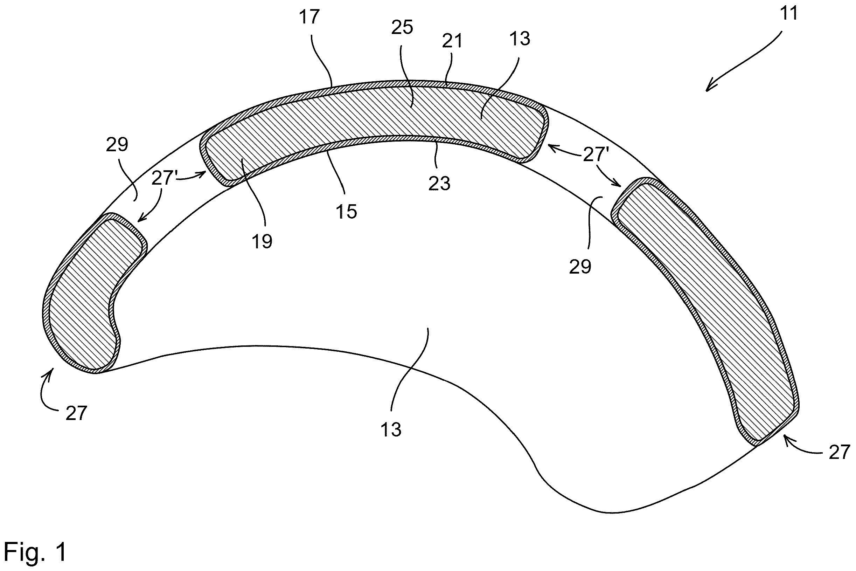

Bei dem Helm 11 der in Fig. 1 gezeigten Ausführungsform handelt es sich um einen Fahrradhelm, der in einer stark vereinfachten Schnittdarstellung dargestellt ist. Insbesondere ist in Fig. 1 nur ein Helmkörper 13 des Helms 11 gezeigt, wobei der Helm 11 noch weitere Elemente, wie etwa Gurte zu seiner Befestigung, Polster für einen bequemen Sitz auf dem Kopf des jeweiligen Trägers etc., umfassen kann.

Der Helmkörper 13 weist näherungsweise eine Kugelschalenform und folglich eine konkav geformte Innenseite 15 sowie eine konvex geformte Außenseite 17 auf. Dabei ist der Helm 11 dazu ausgebildet, auf den Kopf eines Trägers aufgesetzt zu werden, wobei die Innenseite 15 des Helmkörpers 13 zum Kopf weist bzw. daran anliegt und die Außenseite 17 des Helmkörpers 13 vom Kopf weg weist. Der Helm 11 weist ferner mehrere Belüftungsöffnungen 29 auf, die sich jeweils in (bezüglich eines Mittelpunkts der genannten Kugelschalenform) im Wesentlichen radialer Richtung durch den Helmkörper 13 hindurch erstrecken.

Der Helmkörper 13 umfasst einen festen Schaum 19. Insbesondere ist der Helmkörper 13 aus dem festen Schaum 19 gebildet. Erfindungsgemäß weist der feste Schaum 19 dabei eine zumindest bereichsweise variierende Härte auf.

Bei der gezeigten Ausführungsform variiert die Härte des festen Schaums 19 insbesondere insofern, als der feste Schaum eine äußere Oberflächenschicht 21, eine innere Oberflächenschicht 23 sowie einen Kern 25 aufweist und die Härte der äußeren Oberflächenschicht 21 und der inneren Oberflächenschicht 23 größer als die Härte des Kerns 25 ist. Die äußere Oberflächenschicht 21 begrenzt den Helmkörper 13 (bezüglich eines Mittelpunkts der genannten Kugelschalenform) radial nach außen, während die innere Oberflächenschicht 23 den Helmkörper 13 radial nach innen begrenzt. Der Kern 25 ist zwischen der äußeren Oberflächenschicht 21 und der inneren Oberflächenschicht 23 angeordnet.

Durch diese Ausbildung variiert die Härte des festen Schaums 19 in radialer Richtung. Darüber hinaus variiert die Härte des festen Schaums 19 auch in tangentialer Richtung. Denn die Härte des festen Schaums 19 ist an den Enden der tangentialen Erstreckung des Helmkörpers 13, die einen umlaufenden Rand 27 des Helmkörpers 13 bilden, größer als in Bereichen dazwischen, insbesondere größer als die Härte des genannten Kerns 25 des Helmkörpers 13.

Ferner wird die tangentiale Erstreckung des Helmkörpers 13 auch durch die genannten Belüftungsöffnungen 29 unterbrochen. Der feste Schaum 19 weist dabei jeweils auch im Bereich eines umlaufenden Rands 27' der jeweiligen Belüftungsöffnung 29 eine größere Härte auf als in von den Bellüftungsöffnungen 29 weiter entfernten Bereichen, insbesondere eine Härte, die größer als die Härte des Kerns 25 des Helmkörpers 13 ist. Dabei sind diese Bereiche unterschiedlicher Härte (die Oberflächenschichten 21, 23, der Kern 25 und die umlaufenden Ränder 27, 27') nicht voneinander gesonderte Teile des Helmkörpers 13, sondern sie bestehen vorteilhafterweise aus demselben Material und gehen stoffschlüssig ineinander über, so dass der Helmkörper 13 insgesamt einstückig ausgebildet ist.

Bei der gezeigten Ausführungsform weisen die äußere Oberflächenschicht 21, die innere Oberschichtflächenschicht 23, der umlaufende Rand 27 des Helmkörpers 13 sowie die umlaufenden Ränder 27' der Belüftungsöffnungen 29 jeweils dieselbe Härte auf, die größer als die Härte des Kerns 25 des Helmkörpers 13 ist. Ferner verbinden die umlaufenden Ränder 27, 27' jeweils die äußere Oberflächenschicht 21 und die innere Oberflächenschicht 23 miteinander und gehen dabei nahtlos in die jeweilige Oberflächenschicht 21 bzw. 23 über. Dadurch bilden die Oberflächenschichten 21, 23 und die umlaufenden Ränder 27, 27' gemeinsam eine Gesamtoberflächenschicht des Helmkörpers 13, die den Kern 25 des Helmkörpers 13 vollständig umschließt und den Helmkörper 13 somit nach außen begrenzt.

Auf diese Weise kann der Helmkörper 13 in seinem Kern 25 eine für eine gute Absorption starker Stöße, wie sie etwa bei einem Sturz auftreten können, geeignete Härte aufweisen und gleichzeitig an seiner Oberfläche eine demgegenüber größere Härte aufweisen, die ihn vor kleineren Beschädigungen bei normalem Gebrauch des Helms 11 schützt. Darüber hinaus muss der Kern 25 nicht unbedingt durchgehend dieselbe Härte aufweisen. Vielmehr können ein oder mehrere Abschnitte des Kerns 25 eine andere Härte als der Rest des Kerns 25 aufweisen und/oder ein oder mehrere vom Kern 25 verschiedene sonstige Bereiche des Helmkörpers 13 eine andere Härte als der Kern 25 aufweisen. Dadurch ist es beispielsweise möglich, dass der Helmkörper 13, insbesondere der Kern 25 des Helmkörpers 13, an verschiedenen Stellen unterschiedliche stoßabsorbierende Eigenschaften aufweist, die jeweils speziell an diejenige Art von Stößen angepasst sind, die an der jeweiligen Stelle bei einem Aufprall oder Anprall typischerweise auftreten.

Aufgrund der erfindungsgemäßen Ausbildung kann der Helm 11 daher besonders zuverlässig schützen. Dabei kann er zugleich mit vergleichsweise geringem Aufwand hergestellt werden, da der Helmkörper 13 trotz der in verschiedenen Bereichen des Helms 11 unterschiedlichen stoßabsorbierenden Eigenschaften nicht aus mehreren gesonderten Teilen gebildet werden muss.

### Bezugszeichen

- 11: Helm
- 13: Helmkörper
- 15: Innenseite
- 17: Außenseite
- 19: fester Schaum
- 21: äußere Oberflächenschicht
- 23: innere Oberflächenschicht
- 25: Kern
- 27, 27': umlaufender Rand
- 29: Belüftungsöffnung

## Patentansprüche

1. Helm (11), insbesondere Sporthelm oder Arbeitsschutzhelm, mit einem Helmkörper (13), der einen festen Schaum (19) aus expandierten Schaumpartikeln umfasst,
wobei der feste Schaum (19) zumindest bereichsweise eine variierende Härte aufweist.

2. Helm nach Anspruch 1,
wobei der feste Schaum (19) durchgehend aus demselben Material oder derselben Materialzusammensetzung gebildet ist.

3. Helm nach Anspruch 1 oder 2,
wobei Bereiche unterschiedlicher Härte stoffschlüssig ineinander übergehen.

4. Helm nach einem der vorstehenden Ansprüche,
wobei der Helmkörper (13) näherungsweise eine Kugelschalenform aufweist, und
wobei die Härte des festen Schaums (19) bezüglich eines Mittelpunkts der Kugelschalenform in radialer Richtung variiert.

5. Helm nach Anspruch 4,
wobei die Härte des festen Schaums (19) nach radial außen und/oder nach radial innen zunimmt.

6. Helm nach Anspruch 4 oder 5,
wobei der feste Schaum (19) eine äußere Oberflächenschicht (21) aufweist,
die den Helmkörper (13) radial nach außen begrenzt, eine innere Oberflächenschicht (23) aufweist, die den Helmkörper (13) radial nach innen begrenzt, sowie einen Kern (15) aufweist, der zwischen der äußeren Oberflächenschicht (21) und der inneren Oberflächenschicht (23) angeordnet ist, und
wobei die Härte der äußeren Oberflächenschicht (21) und/oder die Härte der inneren Oberflächenschicht (23) größer als die Härte des Kerns (25) ist.

7. Helm nach einem der vorstehenden Ansprüche,
wobei der Helmkörper (13) näherungsweise eine Kugelschalenform aufweist, und
wobei die Härte des festen Schaums (19) bezüglich eines Mittelpunkts der Kugelschalenform in tangentialer Richtung variiert.

8. Helm nach Anspruch 7,
wobei die Härte des festen Schaums (19) an Enden (27, 27') der tangentialen Erstreckung des Helmkörpers (13) größer als in Bereichen dazwischen ist.

9. Helm nach Anspruch 7,
wobei die Härte des festen Schaums (15) an Enden (27, 27') der tangentialen Erstreckung des Helmkörpers (13) kleiner als in Bereichen dazwischen ist.
